(19) **Europäisches Patentamt**
**European Patent Office**
**Office européen des brevets**

(11) **EP 1 785 201 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(51) Int Cl.:
***B08B 15/00*** *(2006.01)*  ***A62C 2/00*** *(2006.01)*
***F24C 11/00*** *(2006.01)*

(21) Anmeldenummer: **06021806.2**

(22) Anmeldetag: **18.10.2006**

(54) **Rauchschutzanlage**

Smoke protection device

Dispositif de protection contre la fumée

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.11.2005 DE 102005053590**

(43) Veröffentlichungstag der Anmeldung:
**16.05.2007 Patentblatt 2007/20**

(73) Patentinhaber: **Eidmann, Jürgen**
**61348 Bad Homburg (DE)**

(72) Erfinder: **Eidmann, Jürgen**
**61348 Bad Homburg (DE)**

(74) Vertreter: **von dem Borne, Andreas et al**
**Andrejewski - Honke**
**Patent- und Rechtsanwälte**
**P.O. Box 10 02 54**
**45002 Essen (DE)**

(56) Entgegenhaltungen:
**EP-A- 0 995 955    WO-A-03/038283**
**DE-A1- 1 454 651    DE-A1- 2 157 384**
**DE-U1- 9 409 176    GB-A- 2 112 282**
**US-A- 4 944 216    US-A- 5 788 571**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Rauchschutzanlage für ein Gebäude, welches einen oder mehrere mögliche Brandräume sowie einen oder mehrere über Türen oder dergleichen mit den Brandräumen verbundene Fluchtwege aufweist,
mit

- zumindest einer Zuluft-Anlage, welche zumindest einen die Fluchtwege und gegebenenfalls die Brandräume im Brandfall mit Überdruck beaufschlagenden Zuluft-Ventilator und zumindest eine Zuluft-Regelklappenvorrichtung aufweist, wobei die Zuluft-Regelklappenvorrichtung zumindest eine federbelastete Regelklappe aufweist, die bei Überschreiten eines vorgegebenen Grenzüberdrucks selbsttätig öffnet und bei Unterschreiten des Grenzüberdrucks selbsttätig schließt,

- und zumindest einem Abluft-Kanal, welcher an einen oder mehrere Brandräume unter Zwischenschaltung zumindest jeweils einer Entrauchungsklappe angeschlossen ist und zum Abführen von Rauch aus dem Gebäude herausgeführt ist.

Gebäude meint im Rahmen der Erfindung insbesondere Gebäude mit mehreren Etagen, welche über ein oder mehrere Treppenhäuser miteinander verbunden sind. In derartigen Gebäuden stellen insbesondere die Treppenhäuser und gegebenenfalls sich daran anschließende Flure Fluchtwege bzw. Rettungswege dar. Mögliche Brandräume sind dagegen angrenzende Nutzungseinheiten wie Wohnungen, Büros oder ähnliches. Die Rauchschutzanlage ist als Rauchschutz-Differenzdruckanlage ausgebildet, wobei durch den über die Zuluft-Anlage eingestellten Überdruck im Bereich der Flucht- und Rettungswege eine Rauchfreihaltung im Brandfall gewährleistet ist. Aus Sicherheitsgründen darf der für die Rauchfreihaltung erforderliche Überdruck einen zulässigen Maximalwert (zum Bespiel 50 Pa) nicht überschreiten. Aus diesem Grunde sorgt die Zuluft-Regelklappenvorrichtung für eine selbsttätige Luftabfuhr überschüssiger Luft. Die Regelklappen öffnen bei Erreichen des zulässigen Überdrucks unter Wirkung der skalaren Druckkräfte selbsttätig und die überschüssige Luft wird mit einem Durchström-Druckverlust, der dem geforderten zulässigen Überdruck des Druckraumes entspricht, an die Atmosphäre übergeben, so dass die Regelklappe dann selbsttätig wieder schließt.

Bei einer bekannten Rauchschutzanlage der eingangs beschriebenen Art können die möglichen Brandräume in den einzelnen Etagen über Entrauchungsklappen an einen gemeinsamen Abluft-Schacht angeschlossen sein. Die Ansteuerung der Anlage erfolgt zum Beispiel über Rauchmelder, die vor jeder Zugangstür im Flur oder der Schleuse der nachgeschalteten Räume außerhalb des geschützten Bereichs angeordnet sind. Bei Rauchdetektierung der Rauchmelder wird die Rauchschutz-Druckanlage, nämlich die Zuluft-Anlage, in Betrieb gesetzt. Dabei stellt jede Etage eine Melder-Linie dar. Die Abströmung des Rauchs im Zuge der Entrauchung kann über den Abluft-schacht erfolgen (vgl. DE 102 51 149 A1 bzw. WO 03038283). Insofern ist eine natürliche Abströmung über zum Beispiel die Fassade des Gebäudes vorgesehen. Problematisch ist in diesem Zusammenhang, dass solche natürlichen Abströmungen in erheblichem Maße meteorologischen Einflüssen unterliegen können. Die Zufälligkeit dieser meteorologischen Einflüsse kann die Sicherheitsfunktion einer solchen Differenzdruckanlage stören. - Hier setzt die Erfindung ein.

Das Dokument US 5 788 571 zeigt eine Rauchschutzanlage gemäß dem Oberbegriff des Anspruchs 1.

Der Erfindung liegt die Aufgabe zu Grunde, eine Rauchschutzanlage für ein Gebäude der eingangs beschriebenen Art zu schaffen, welche auf einfache Weise eine zuverlässige und sichere Funktion gewährleistet, ohne dass meteorologische Einflüsse die Sicherheit der Anlage stören können.

Die Lösung dieser Aufgabe lehrt die Erfindung bei einer gattungsgemäßen Rauchschutzanlage gemäß dem kennzeichnenden Teil des Anspruchs 1.

Die Erfindung geht dabei zunächst einmal von der Erkenntnis aus, dass meteorologische Einflüsse auf die Sicherheitsfunktion der Anlage und insbesondere auf das kontinuierliche und zuverlässige Abführen von Rauch dann unterbunden werden können, wenn zur Rauchfreihaltung nicht mit einer natürlichen Abströmung gearbeitet wird, sondern wenn mit einer maschinellen Abluft-Anlage mit Hilfe eines Ventilators aktiv der Rauch aus den Brandräumen über den Abluft-Kanal abgesaugt wird. Der Begriff Ventilator umfasst im Rahmen der Erfindung ganz allgemein saugende und/oder blasende Fördereinrichtungen und folglich auch Pumpen oder dergleichen. Bei Einsatz einer solchen maschinellen Abluft-Anlage mit einem absaugenden Ventilator stellt sich jedoch grundsätzlich das Problem, dass in den an die Fluchtwege angrenzenden Brandräumen durch das Absaugen Differenzdrucke über geschlossene Türen entstehen, welche das Öffnen der Tür zwischen Brandraum und Fluchtweg erheblich erschweren können und somit aus Sicherheitsgründen nicht akzeptabel sind. Denn selbst bei Einsatz einer selbstregelnden Zuluft-Anlage, die dafür sorgt, dass der Überdruck im Bereich der Fluchtwege beispielsweise einen Wert von 50 Pa nicht überschreitet, besteht bei Einsatz einer maschinell saugenden Abluft-Anlage - ohne zusätzliche Maßnahmen - das Problem, dass sich ein Druck im Bereich des Brandraums einstellt, der unterhalb des Atmosphärendrucks liegt, so dass der Differenzdruck dann den zulässigen Maximalwert von 50 Pa überschreitet. Aus diesem Grunde schlägt die Erfindung vor, im Bereich der Abluft-Anlage in Kombination mit einem Abluft-Ventilator eine Abluft-Regelklappenvorrichtung einzusetzen die nun dafür sorgt, dass bei unzulässig niedrigen Drücken im Bereich der Brandräume die federbelastete Regelklappe durch den in der Abluft-Anlage entstehenden Unterdruck selbsttätig öffnet. Erfindungsgemäß wird folglich im Bereich einer geschlossenen Tür zwischen Fluchtweg und Brandraum die zu hohe Druckdifferenz vermieden, so dass über geschlossenen Türen stets nur die positive zulässige Druckdifferenz durch die Zuluft-Anlage anstehen kann. Öffnet sich nun eine solche Tür, sind die maschinelle Zuluft-Anlage und die maschinelle Abluft-Anlage unmittelbar in Kontakt und im Bereich der Abluft-Anlage bzw. im Bereich des Abluftkastens werden infolge Unterschreitung des Klappenöffnungsdruckes die Klappensysteme selbsttätig geschlossen, so dass ein geplanter Volumenstrom durch die Zu- und Abluft-Anlage aus dem Gebäude transportiert wird. Insgesamt gewährleistet die erfindungsgemäße Anlage eine einwandfreie Ableitung des Rauches ohne störende meteorologische Einflüsse und ohne die Gefahr unzulässig hoher Differenzdrücke im Bereich geschlossener Türen zwischen Fluchtwegen und Brandräumen. Dieses gelingt, weil mit einer maschinell absaugenden Abluft-Anlage gearbeitet wird, und zwar in Kombination mit einerseits einer selbstregelnden Differenzdruck-Zuluft-Anlage und andererseits einer selbstregelnden Differenzdruck-Abluft-Anlage, jeweils unter Einsatz von selbsttätigen Regelklappensystemen.

Der erfindungsgemäße Abluftkasten, an welchen einerseits der Abluft-Ventilator und andererseits die Abluft-Regelklappenvorrichtungen angeschlossen sind, bildet einen Sammelkasten. Dabei ist zweckmäßig, wenn die Abluft-Anlage nicht nur eine, sondern vorzugsweise zwei oder auch mehr als zwei Abluft-Regelklappenvorrichtungen aufweist. Jede einzelne der Abluft-Regelklappenvorrichtungen kann dabei eine oder auch mehrere selbsttätige Regelklappen aufweisen. Bei Einsatz mehrerer Abluft-Regelklappenvorrichtungen besteht die Möglichkeit, diese an unterschiedlichen Seiten bzw. Seitenwänden des Abluftkastens anzuordnen, so dass dann der Einfluss meteorologischer Gegebenheiten weiter reduziert werden kann. Dieses gilt insbesondere, wenn die Abluft-Regelklappenvorrichtungen an gegenüberliegenden Seiten des Abluftkastens angeordnet werden. Es kann bei einem Abluftkasten mit rechteckigem Querschnitt auch besonders zweckmäßig sein, mit vier Abluft-Regelklappenvorrichtungen zu arbeiten, welche jeweils einer Seitenwand zugeordnet sind. Im Übrigen ist es zweckmäßig, wenn der Abluft-Kanal, zum Beispiel in der Ausführungsform als L90-Schacht, aus dem Dach des Gebäudes herausgeführt ist und der Abluftkasten folglich endseitig im Bereich des Daches an den Abluft-Kanal angeschlossen ist.

Nach einem weiteren Vorschlag der Erfindung, dem besondere Bedeutung zukommt, ist vorgesehen, dass der dem Grenzunterdruck entsprechende Klappen-Öffnungsdruck der Regelklappe(n) der Abluft-Regelklappenvorrichtung in etwa dem (maximalen) Kanaldruckverlust des Abluft-Kanals bei einem vorgegebenen Volumenstrom entspricht oder (geringfügig) größer ist. Der Kanaldruckverlust ist im Rahmen der Erfindung als positive Druckdifferenz definiert. Der Klappenöffnungsdruck, bei dem die Regelklappen wegen des geringen Innendrucks im Sammelkasten nach innen schwenken, ist hier ebenfalls als positive Druckdifferenz definiert. Dabei geht die Erfindung von der Erkenntnis aus, dass das Ableiten eines vorgegebenen Volumenstroms aus den Brandräumen über den Abluft-Kanal in den Bereich der Abluft-Anlage mit einem ganz bestimmten Druckverlust im Abluft-Kanal verbunden ist. Diese Druckverluste können insbesondere bei Gebäuden mit einer Vielzahl von Etagen eine Größenordnung erreichen, die dem Überdruck von beispielsweise 50 Pa im Bereich der Fluchtwege entspricht oder auch deutlich größer ist. Dieser saugseitige Kanaldruckverlust wird im Rahmen der Erfindung nun dadurch kompensiert, dass der Klappenöffnungsdruck der Abluft-Regelklappenvorrichtungen so dimensioniert wird, dass er dem maximalen Kanaldruckverlust entspricht oder geringfügig größer ist. Auf diese Weise wird auch unter Berücksichtung der Kanaldruckverluste gewährleistet, dass trotz der erheblichen Unterdrücke im Bereich des Sammelkastens im Bereich der Brandräume stets ein solcher Druck eingestellt ist, dass über geschlossenen Türen keine unzulässig hohen Druckdifferenzen entstehen. So stellt sich im Bereich des Abluftkastens nach Hochlaufen des Ventilators bei geschlossener Tür ein Unterdruck ein, welcher dem Kanaldruckverlust entspricht. In diesem Moment öffnen die Regelklappen und der Ventilator saugt gleichsam über die geöffneten Regelklappen unmittelbar aus der Atmosphäre. Die durch die geöffneten Klappenflächen entstehenden Druckverluste im Sammelkasten liegen in der Größenordnung des maximalen Kanaldruckverlustes, so dass für die geöffnete Klappenstellung der angeschlossene saugseitige Kanal nicht durchströmt wird und demzufolge druckverlustfrei bleibt. Der Abzugs-Ventilator erfährt in dieser Funktionsstellung lediglich unwesentliche Arbeitspunktverschiebungen auf der Kennlinie. Wird nun eine Tür zwischen Fluchtweg und Brandraum geöffnet, so erhöht sich der Druck im Abluftkasten um den ursprünglich im Fluchtweg eingestellten positiven Überdruck von zum Beispiel 50 Pa, so dass der Unterdruck im Abluftkasten sinkt und folglich der Klappenöffnungsdruck unterschritten wird, so dass die Klappen selbsttätig schließen. Über den Abluft-Kanal wird dann der geplante Volumenstrom gefördert.

Wie erläutert kommt im Rahmen der Erfindung sowohl den Zuluft-Regelklappenvorrichtungen als auch den Abluft-Regelklappenvorrichtungen besondere Bedeutung zu. Insofern können grundsätzlich herkömmliche Regelklappenvorrichtungen mit federbelasteten selbsttätigen Regelklappen zum Einsatz kommen. In besonders bevorzugter Ausführungsform der Erfindung werden jedoch Regelklappenvorrichtungen gemäß den Patentansprüchen 7 bis 11 verwendet. Weitere Einzelheiten dazu sind Gegenstand der Figurenbeschreibung.

Ferner ist Gegenstand der Erfindung ein Verfahren zum Abführen von Rauch aus Brandräumen eines Gebäudes und zur Rauchfreihaltung von Fluchtwegen des Gebäudes mit einer Rauchschutzanlage der beschriebenen Art, wobei im Brandfall mit der Zuluft-Anlage in den Fluchtwegen ein Überdruck eingerichtet wird, welcher einen vorgegebenen Grenz-Überdruck nicht überschreitet, wobei mit der Abluft-Anlage Rauch aus einem über eine geschlossene Tür von dem Fluchtweg getrennten Brandraum derart abgeführt wird, dass in dem Brandraum ein vorgegebener Minimaldruck nicht unterschritten wird, so dass die Druckdifferenz zwischen Fluchtweg und Brandraum über die geschlossene Tür den vorgegebenen Grenz-Überdruck nicht überschreitet. Die Einhaltung des zugelassenen Minimaldrucks, zum Beispiel Atmosphärendrucks, im Bereich des Brandraumes erfolgt durch selbsttätige Einstellung eines vorgegebenen Grenzunterdrucks in der Abzugsanlage, zum Beispiel in einem Sammelkasten, und zwar bevorzugt unter Berücksichtigung des maximal möglichen Kanaldruckverlustes im Abzugskanal zwischen Brandraum und Sammelkasten.

Im Folgenden wird die Erfindung anhand einer lediglich ein Ausführungsbeispiel darstellenden Zeichnung näher erläutert. Es zeigen

Fig. 1        eine erfindungsgemäße Rauchschutzanlage in einem mehrgeschossigen Gebäude in schematischer Ansicht,

Fig. 2        den Gegenstand nach Fig. 1 im Brandfall bei geschlossener Tür zwischen Fluchtweg und Brandraum,

Fig. 3        den Gegenstand nach Fig. 2 bei geöffneter Tür zwischen Fluchtweg und Brandraum,

Fig. 4        einen Ausschnitt aus dem Gegenstand nach Fig. 2,

Fig. 5        ein Arbeitsdiagramm des Abzugs-Ventilators im Betrieb der Anlage,

Fig. 6        eine bevorzugt eingesetzte Regelklappenvorrichtung als Mehrklappenvorrichtung in perspektivischer Ansicht,

Fig. 7        einen Ausschnitt aus dem Gegenstand nach Fig. 6,

Fig. 8        eine schematische Draufsicht auf den Gegenstand nach Fig. 7,

Fig. 9a-d     schematisch und ausschnittsweise den Gegenstand nach Fig. 8 in unterschiedlichen Funktionsstellungen,

Fig. 10       den Anschlusshebel einer erfindungsgemäßen Regelklappenvorrichtung in perspektivischer Ansicht und

Fig. 11       den Verlauf der öffnenden Momente und des schließenden Moments in Abhängigkeit vom Regelklappenwinkel.

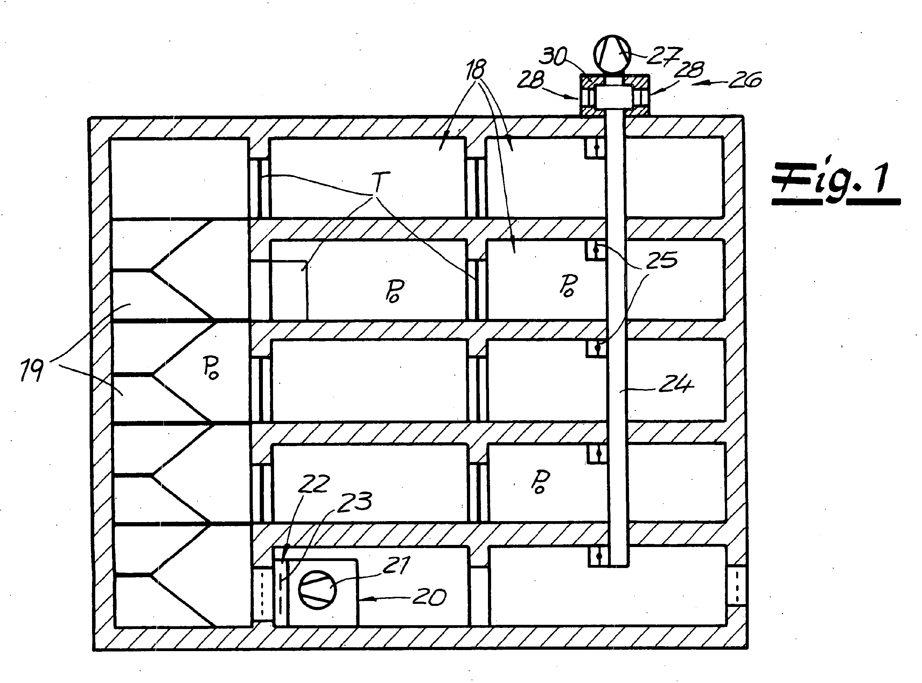

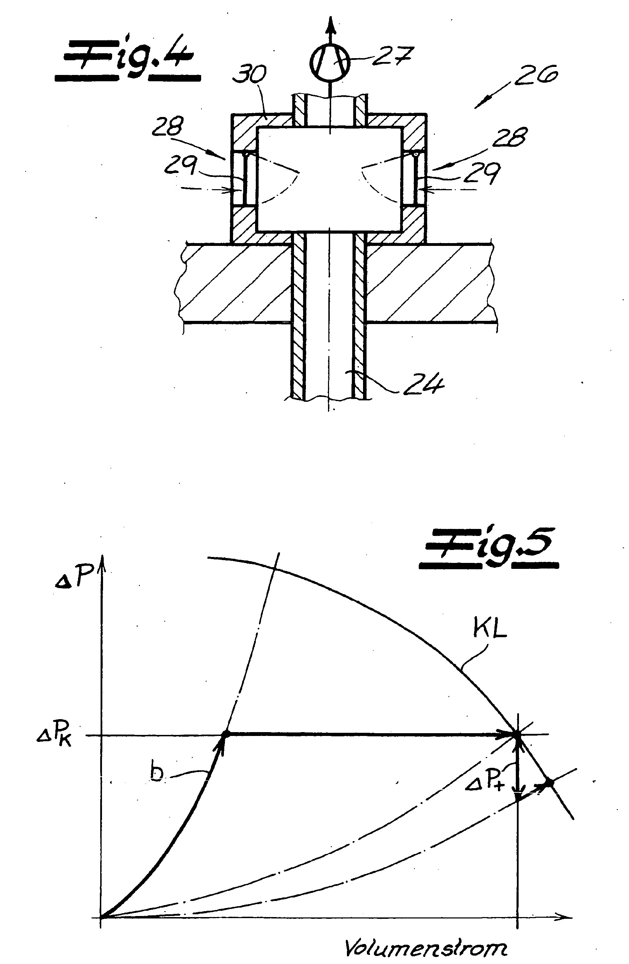

In den Fig. 1 bis 3 ist schematisch ein mehrgeschossiges Gebäude mit einer erfindungsgemäßen Rauchschutzanlage dargestellt. Das Gebäude weist eine Mehrzahl von Etagen mit mehreren möglichen Brandräumen 18 sowie einem Fluchtweg 19 auf, wobei die Brandräume 18 über Türen T mit dem Fluchtweg 19 verbunden sind. Bei dem Fluchtweg 19 handelt es sich hier insbesondere um ein Treppenhaus. In der unteren Etage ist eine Zuluft-Anlage 20 angeordnet, welche einen Zuluft-Ventilator 21 aufweist, der im Brandfall die Fluchtwege 19 und - bei einer eventuell geöffneten Tür T - auch einen möglichen Brandraum 18 mit Überdruck beaufschlagt. Ferner weist die Zuluft-Anlage 20 eine Zuluft-Regelklappenvorrichtung 22 auf, welche zumindest eine federbelastete Regelklappe 23 aufweist, die bei Überschreiten eines vorgegebenen Grenzüberdrucks $\Delta P_+$ selbsttätig nach außen öffnet und bei Unterschreiten des Grenzüberdrucks $\Delta P_+$ selbsttätig schließt. Ferner ist ein Abluft-Kanal 24 vorgesehen, welcher an die Brandräume 18 unter Zwischenschaltung zumindest jeweils einer Entrauchungsklappe 25 angeschlossen ist und zum Abführen von Rauch aus dem Gebäude herausgeführt ist. An diesen Abluft-Kanal 24 ist eine Abluft-Anlage 26 angeschlossen, welche einen die Abluft-Anlage 26 mit Unterdruck beaufschlagenden Abluft-Ventilator 27 sowie mehrere Abluft-Regelklappenvorrichtungen 28 aufweist. Die Abluft-Regelklappenvorrichtungen 28 weisen jeweils zumindest eine federbelastete Regelklappe 29 auf, die bei Überschreiten eines vorgegebenen Grenzunterdruckes $\Delta P-$ in der Abluft-Anlage 26 selbsttätig öffnet und bei Unterschreiten des Grenzunterdruckes $\Delta P-$ selbsttätig schließt. Dabei weist die Abluft-Anlage 26 einen an den Abluft-Kanal 24 angeschlossenen Abluftkasten 30 auf, an welchen einerseits der Abluft-Ventilator 27 und andererseits die beiden Abluft-Regelklappenvorrichtungen 28 angeschlossen sind, wobei die Regelklappen 29 im Zuge des Öffnens in Richtung des Innenraumes des Abluftkastens 30 schwenken. Im Ausführungsbeispiel sind die beiden Abluft-Regelklappenvorrichtungen 28 an unterschiedlichen Seiten des Abluftkastens 30 angeordnet, nämlich an gegenüberliegenden Seiten. Die Abluft-Anlage 26 ist schematisch in Fig. 4 dargestellt. Dabei ist der Abluft-Kanal 24 aus dem Dach des Gebäudes herausgeführt und der Abluftkasten 30 ist endseitig im Bereich des Daches an den Abluft-Kanal 24 angeschlossen, zum Beispiel auf das Dach aufgesetzt.

Die Funktionsweise der erfindungsgemäßen Rauchschutzanlage ergibt sich insbesondere aus einer vergleichenden Betrachtung der Fig. 1 bis 3.

Fig. 1 zeigt das Gebäude mit der Rauchschutzanlage zunächst im "Normalzustand", das heißt ohne einen Brand in einer der Etagen. Zuluft-Anlage 20 und Abluft-Anlage 26 sind außer Betrieb. Der Druck im gesamten Gebäude entspricht im Wesentlichen dem Atmosphärendruck P0, das heißt die Druckdifferenz $\Delta P$ beträgt ca. 0 Pa. Die Entrauchungsklappen 25 sind geschlossen.

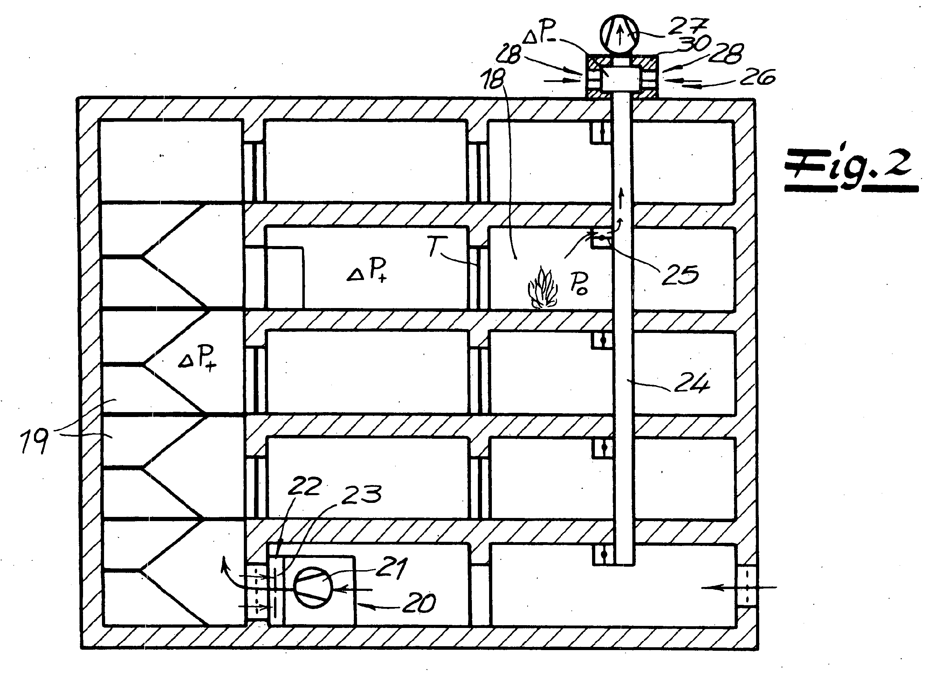

Wird nun ein Brand in einer der Etagen über zum Beispiel einen nicht dargestellten Rauchmelder detektiert, so werden sowohl die Zuluft-Anlage 20 als auch die Abluft-Anlage 26 in Betrieb genommen und die dem Brandraum 18 zugeordnete Entrauchungsklappe 25 wird geöffnet. Dieser Funktionszustand ist in Fig. 2 angedeutet. Der Zuluft-Ventilator 21 pumpt nun Luft in den Bereich des Fluchtweges 19 (Treppenhaus). Wird dabei ein vorgegebener Grenzüberdruck $\Delta P_+$ von zum Beispiel 50 Pa überschritten, so öffnen die Regelklappen 23 der Zuluft-Regelklappenvorrichtung 22 selbsttätig, so dass sich der gewünschte Überdruck $\Delta P_+$ von beispielsweise 50 Pa selbsttätig bzw. automatisch im Bereich des Fluchtweges 19 einstellt. Ferner ist erkennbar, dass der Brandraum 18 über eine geschlossene Tür T von dem unter Überdruck stehenden Fluchtweg 19 getrennt ist. Da nicht nur die Zuluft-Anlage 20 sondern auch die Abluft-Anlage 26 im Brandfall hochgefahren wird, wird nun über den Abluft-Ventilator 27 der entstehende Rauch aus dem Brandraum 18 abgesaugt, und zwar durch die geöffnete Entrauchungsklappe 25 und den Abluft-Kanal 24. Die Abluft-Regelklappenvorrichtungen 28 im Bereich des Abluftkastens 30 sorgen nun dafür, dass im Bereich des Brandraumes 18 kein unzulässig hoher Unterdruck entsteht, da dieser bei geschlossener Tür T das Öffnen dieser Tür erschweren würde. Es ist folglich von besonderer Bedeutung, dass im Bereich geschlossener Türen T zwischen Brandraum 18 einerseits und Fluchtweg 19 andererseits keine unzulässig hohen Differenzdrucke auftreten. Aufgrund des Kanaldruckverlustes $\Delta P_k$ im Abluft-Kanal 24 entsteht im Zuge des Absaugens mit dem Abluft-Ventilator 27 im Bereich des Sammelkastens 30 ein Unterdruck. Die Abluft-Regelklappenvorrichtungen 28 sind nun so dimensioniert, dass bei Erreichen bzw. Überschreiten eines vorgegebenen Grenzunterdruckes $\Delta P_-$ im Sammelkasten 30 die Regelklappen 29 selbsttätig nach innen öffnen, so dass kein unzulässig hoher Unterdruck im Bereich des Brandraumes entstehen kann. Der Klappenöffnungsdruck entspricht dabei im Wesentlichen dem maximalen Kanaldruckverlustbetrag $\Delta P_k$ bzw. liegt unmittelbar oberhalb dieses Kanaldruckverlustbetrages. Beträgt der Kanaldruckverlust $\Delta P_k$ beispielsweise 150 Pa, so ist es zweckmäßig, den Klappen-Öffnungsdruck und folglich Grenzunterdruck $\Delta P_-$ der Abluft-Regelklappenvorrichtung 28 auf zum Beispiel 160 Pa einzustellen. Wird folglich im Bereich des Sammelkastens 30 ein Unterdruck von 160 Pa erreicht, so öffnen die Regelklappen 29 selbsttätig. Der durch die geöffneten Klappenflächen entstehende Druckverlust im Sammelkasten 30 liegt in der Größenordnung des maximalen Kanaldruckverlustes $\Delta P_k$, so dass für die geöffnete Klappenstellung der angeschlossene saugseitige Kanal 24 nicht mehr durchströmt wird und demzufolge druckverlustfrei bleibt.

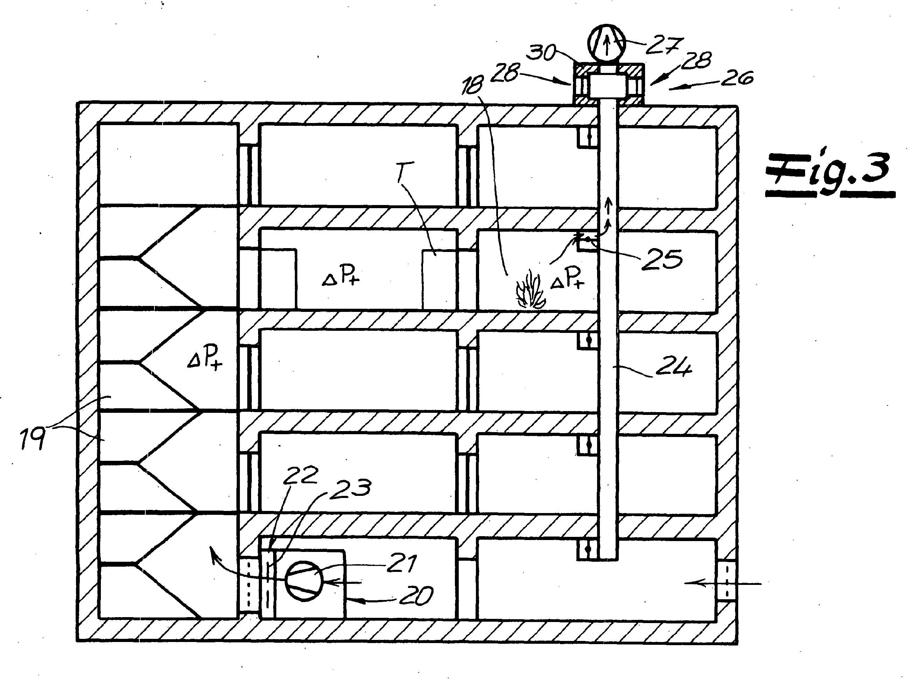

Wird nun die Tür T zwischen Brandraum 18 und Fluchtweg 19 so wie in Fig. 3 angedeutet geöffnet, sind die Zuluft-Anlage 20 und die Abluft-Anlage 26 unmittelbar in Kontakt und im Sammelkasten 30 werden infolge der Unterschreitung des Klappenöffnungsdruckes die Klappensysteme selbsttätig geschlossen. Der Druck im Sammelkasten steigt um den zuvor im Fluchtweg eingestellten Überdruck und folglich um beispielsweise 50 Pa, so dass sich ein Unterdruck von nun nur noch 110 Pa einstellt, so dass die Klappen selbsttätig schließen. Nun wird der geplante Volumenstrom über den Kanal 24 gefördert.

Durch die Dimensionierung des Systems ist dabei gewährleistet, dass - wegen der Kanaldruckverluste - die Klappen nicht ohne weiteres wieder öffnen. Dieses geschieht erst, wenn die beschriebene Tür wieder geschlossen wird, so dass dann wieder eine Druckdifferenz über die geschlossene Tür aufgebaut werden kann.

Die Funktionsweise wird auch anhand des Arbeitsdiagramms gemäß Fig. 5 deutlich. Dort ist der Unterdruck $\Delta P$ im Bereich des Sammelkastens 30 als Funktion des geförderten Volumenstroms aufgetragen. Der Unterdruck ist auch hier als positive Druckdifferenz definiert, das heißt bei Absenkung des Innendrucks im Sammelkasten gegenüber dem Außendruck steigt der Unterdruck. Dabei ist die Kennlinie KL des Abzugs-Ventilators 27 eingezeichnet. Die Parabel b zeigt den Verlauf während des Hochlaufens des Ventilators 27 bei geschlossener Tür. Der Unterdruck steigt entlang der Druckverlustparabel a an, bis der Klappenöffnungsdruck erreicht ist, der hier dem Kanaldruckverlust $\Delta P_k$ entspricht. Sobald dieser Klappenöffnungsdruck erreicht ist, öffnen die Klappen schlagartig, so dass der Arbeitspunkt des Ventilators bei geschlossener Tür und geöffneten Klappen auf der Kennlinie erreicht wird. Wird nun die in den Figuren dargestellte Tür T geöffnet, so erhöht sich der Druck im Sammelkasten 30 um den ursprünglich im Bereich des Fluchtweges eingestellten Überdruck $\Delta P_+$ = 50 Pa. Dieses führt zu einer Absenkung des Unterdrucks im Bereich des Sammelkastens um genau diesen Differenzbetrag. Nun wird über den Abluft-Kanal 24 ein vorgegebener Volumenstrom gefördert, so dass der Druck im Sammelkasten 30 sinkt und folglich der Differenzdruck wieder steigt, bis der Arbeitspunkt der Kennlinie bei geöffneter Tür T und geschlossenen Klappen erreicht ist.

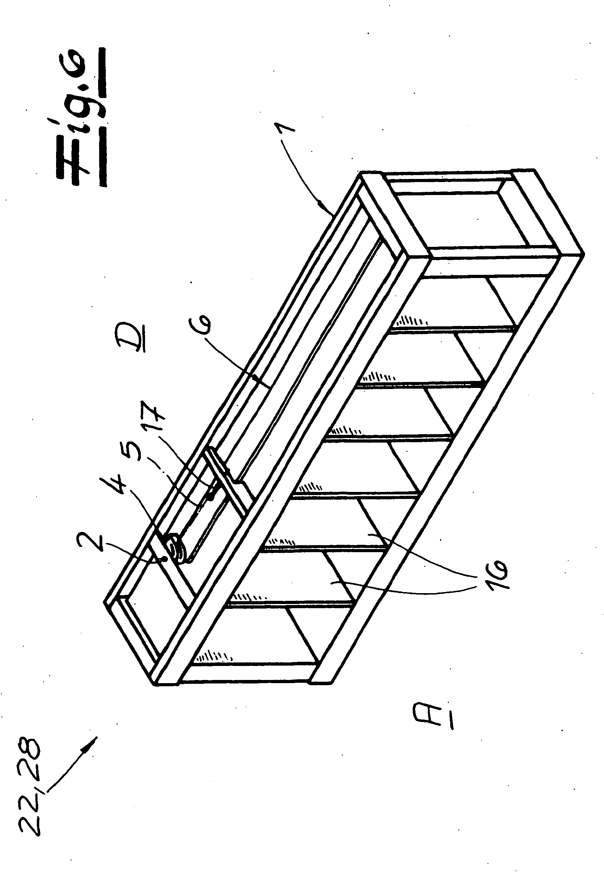

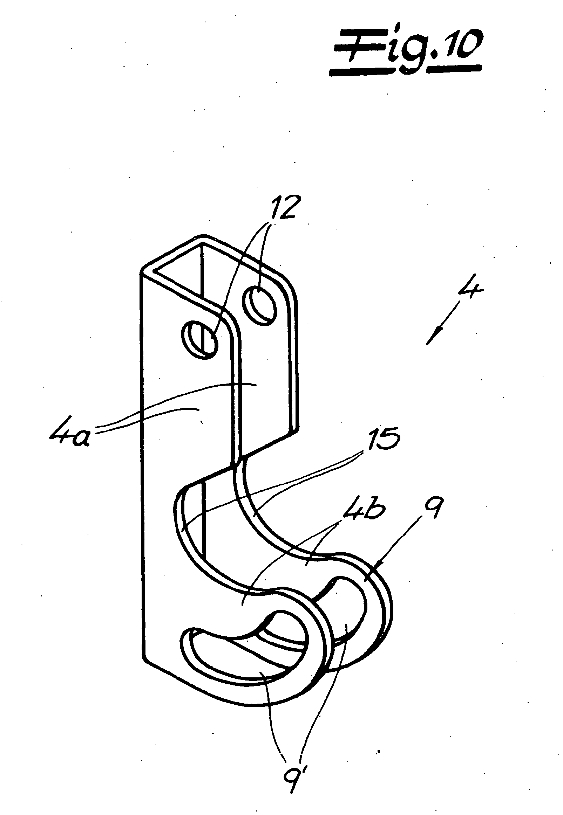

Der detaillierte Aufbau sowohl der Zuluft-Regelklappenvorrichtung 22 als auch der Abluft-Regelklappenvorrichtungen 28 ergibt sich aus den Fig. 6 bis 11. Dort ist eine solche Regelklappenvorrichtung für eine Rauchschutz-Differenzdruckanlage mit einem Gehäuse 1, zumindest einer um eine Drehachse 2 schwenkbar in dem Gehäuse gelagerten Regelklappe 3 und zumindest einer einerseits an das Gehäuse 1 und andererseits über einen Anschlußhebel 4 an die Regelklappe 3 angeschlossenen Schließfeder 5 dargestellt. Die Regelklappe 3 entspricht hier entweder der Regelklappe 23 der Zuluft-Regelklappenvorrichtung 22 oder der Regelklappe 29 der Abluft-Regelklappenvorrichtung 28. Gemäß Fig. 6 ist die Regelklappenvorrichtung im Ausführungsbeispiel als Mehrklappenvorrichtung mit einer Mehrzahl nebeneinander angeordneter Regelklappen 3, 3' ausgebildet, wobei die Regelklappen 3, 3' über ein Verbindungsgestänge 6 miteinander verbunden sind und gemeinsam öffnen und schließen, und wobei auf die mehreren Regelklappen 3, 3' eine einzige gemeinsame Schließfeder 5 unter Zwischenschaltung eines einzigen gemeinsamen Anschlußhebels 4 wirkt. Die Schließfeder 5 ist als Zugfeder und im Ausführungsbeispiel als zylindrische Schraubenfeder ausgebildet. Die dargestellte Regelklappenvorrichtung kann im Rahmen der Erfindung sowohl als Zuluft-Regelklappenvorrichtung als auch als Abluft-Regelklappenvorrichtung eingesetzt werden. Im Folgenden soll diese bevorzugte Ausführungsform beispielhaft als Zuluft-Regelklappenvorrichtung beschrieben werden.

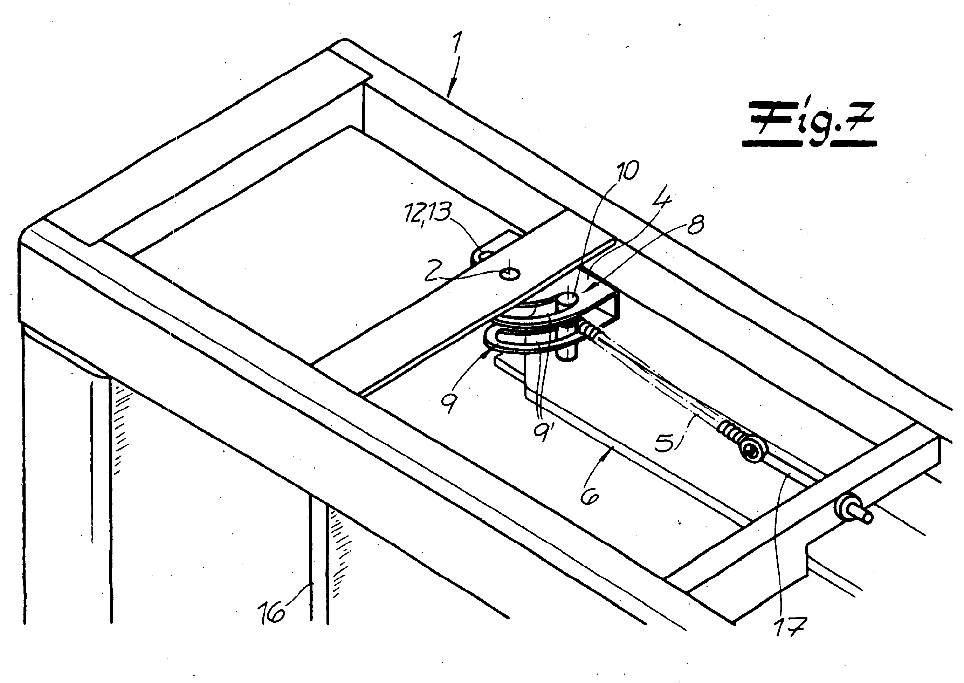

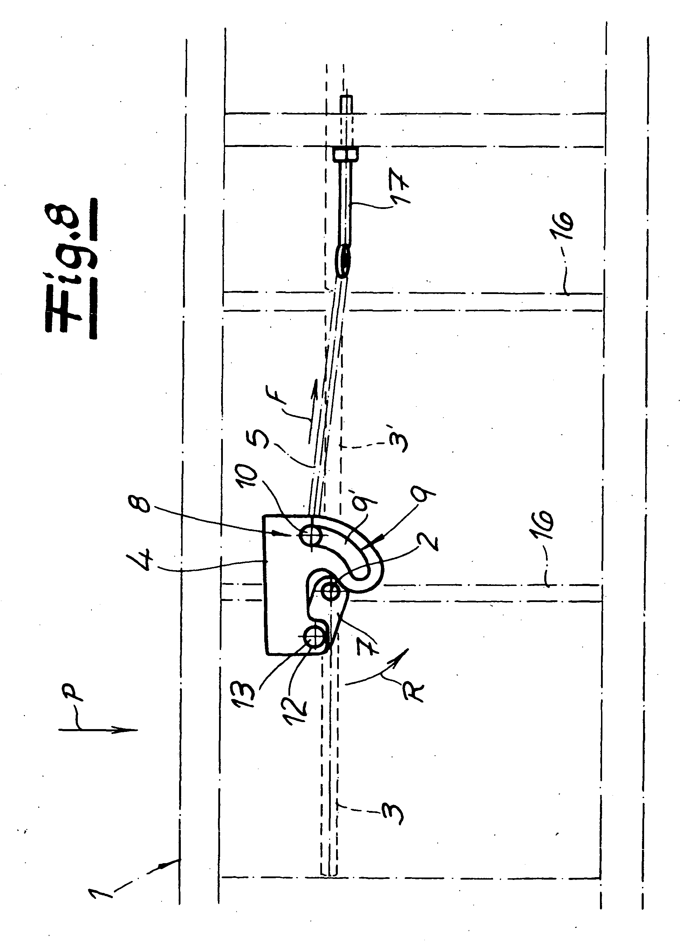

Die in Fig. 6 dargestellte Regelklappenvorrichtung trennt im Rahmen der Rauchschutz-Differenzdruckanlage einen (hinteren) Fluchtweg, in welchem ein Überdruck erzeugt und aufrechterhalten werden soll von einem (vorderen) Außenraum A, in dem beispielsweise Atmosphärendruck herrscht. Die Regelklappen sind in Fig. 6 und 7 nicht erkennbar. Sie sind gemäß Fig. 8 in dem dem Fluchtweg zugewandten (hinteren) Bereich des Gehäuses 1 angeordnet. Fig. 8 zeigt dabei eine Regelklappe 3 in Schließstellung. Die Schließfeder 5 erzeugt mit ihrer Federkraft F ein die Regelklappe 3 in Schließstellung haltendes bzw. in Schließstellung überführendes Schließmoment $M_F$. Über den hier nicht dargestellten Ventilator, welcher ebenfalls Bestandteil der Differenzdruckanlage ist, wird in dem (hinteren) Fluchtweg ein Überdruck aufgebaut, welcher den Fluchtweg von Rauch freihält. Die Regelklappe 3 schwenkt unter Bildung einer Durchströmöffnung um einen vorgegebenen Öffnungswinkel $\alpha$ in Öffnungsrichtung R, sobald ein einseitig auf die Regelklappe bzw. Regelklappen wirkender Öffnungsdruck bzw. Luftdruck P ein das Schließmoment übersteigendes Öffnungsmoment $M_L$ erzeugt. Im Ausführungsbeispiel ist das Schließmoment $M_F$ der Schließfeder 5 so eingestellt, dass das Öffnungsmoment $M_L$ jedenfalls bei einem Überdruck $\Delta P$ von 50 Pa das Schließmoment $M_F$ übersteigt, so dass die Regelklappe 3 öffnet und folglich der Überdruck um ein vorgegebenes Maß abgebaut werden kann. Sobald der Überdruck soweit abgesunken ist, dass das Schließmoment das Öffnungsmoment wieder übersteigt, schließt die Regelklappe 3 wieder selbsttätig. Die Öffnungsrichtung R ist in den Figuren angedeutet. Mit der Regelklappe 3 öffnen und schließen die übrigen Regelklappen 3' simultan.

Im Ausführungsbeispiel ist das Anschlussteil, welches die Schließfeder 5 mit der Regelklappe 3 verbindet, als gelenkig an die Regelklappe 3 angeschlossener Anschlusshebel 4 ausgebildet. Folglich wird im Rahmen der Erfindung ein separates Anschlussgelenkbauteil zur Verfügung gestellt, welches einerseits gelenkig an die Schließfeder 5 und andererseits gelenkig an die Regelklappe 3 angeschlossen ist. Der Anschlußhebel 4 ist folglich sowohl schwenkbar gegenüber der Regelklappe als auch schwenkbar gegenüber der Schließfeder. Dabei zeigt Fig. 8, dass der Anschlusshebel 4 nicht unmittelbar an die Führungsklappe angeschlossen ist, sondern dass der Anschlusshebel 4 gelenkig an einen drehfest mit der Regelklappe 3 verbundenen Verbindungsarm 7 angeschlossen ist. Dieser Verbindungsarm 7 ist unter einem festen Winkel an der Regelklappe 3 befestigt. Die Anordnung ist im Übrigen so getroffen, dass Schließfeder 5 einerseits und Regelklappe 3 (in Schließstellung) andererseits im Wesentlichen parallel zueinander angeordnet sind. Es besteht aber grundsätzlich auch die Möglichkeit, die Schließfeder in Schließstellung in anderem Winkel, zum Beispiel senkrecht bzw. in etwa senkrecht zur Regelklappe anzuordnen. Dann ist es lediglich erforderlich, den Verbindungsarm unter anderem Winkel an die Regelklappe anzuschließen. Stets ist der Verbindungsarm jedoch drehfest mit der Regelklappe verbunden. Jedenfalls weist der Anschlusshebel 4 zumindest eine Gelenkausnehmung 12 auf, in welcher ein Gelenkstift 13 drehbar gelagert ist. Der Gelenkstift 13 ist an die Regelklappe 3 oder den Verbindungsarm 7 angeschlossen.

Der Anschlusshebel 4 weist eine Führungskulisse 8 auf und ist folglich als Kurvenzug mit einer kurvenförmigen Langlochführung 9 ausgebildet, wobei in dieser Langlochführung 9 ein an die Schließfeder 5 endseitig angeschlossenes Führungselement in Form eines Führungszapfens 10 gelenkig und verschiebbar geführt ist. Der Führungszapfen 10 ist dabei wälzgelagert in der Langlochführung 9 geführt. Dieses gelingt zum Beispiel durch beidseitig auf den Führungszapfen 10 aufgesetzte (Schulter-)Kugellager, welche in die beiden Langlöcher 9' eingreifen. Im Übrigen ist in den Figuren erkennbar, dass der Anschlusshebel 4 in der Seitenansicht L-förmig und im Querschnitt U-förmig ausgebildet ist. In der Seitenansicht ist in dem einem L-Schenkel 4a eine Gelenkausnehmung 12 zur gelenkigen Anlenkung des Verbindungsarms 7 und in dem anderen L-Schenkel 4b die Langlochführung 9 mit den beiden Langlöchern 9' angeordnet. Durch die Ausbildung des Anschlusshebels 4 als U-Profil ist es zweckmäßig, wenn in den beiden U-Schenkeln jeweils eine Gelenkausnehmung 12 und ein Langloch 9' vorgesehen sind, wobei diese selbstverständlich fluchten.

Erfindungsgemäß ist die Schließfeder 5 über den Anschlusshebel 4 derart an die Schließklappe 3 angeschlossen, dass der auf die Klappe 3 wirkende Hebelarm a in allen Klappenstellungen größer Null ist, so dass die Federkraft in allen Klappenstellungen ein Schließmoment größer Null erzeugt. Hebelarm a bzw. Länge des Hebelarms meint im Rahmen der Erfindung den senkrechten Abstand der Federkraftwirkungslinie 14 bzw. des Federkraftvektors von dem Drehpunkt bzw. der Drehachse 2.

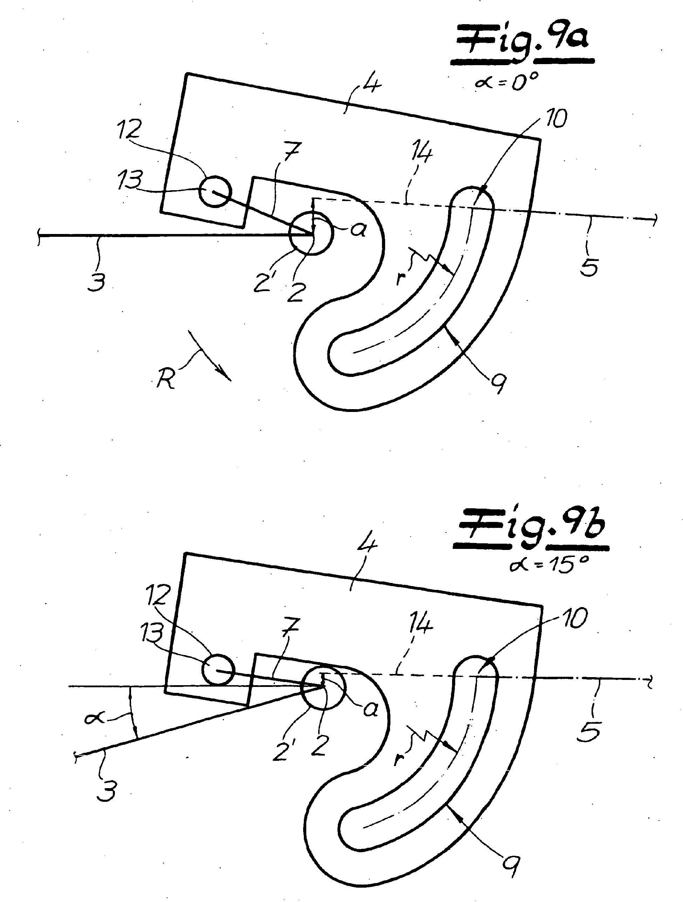

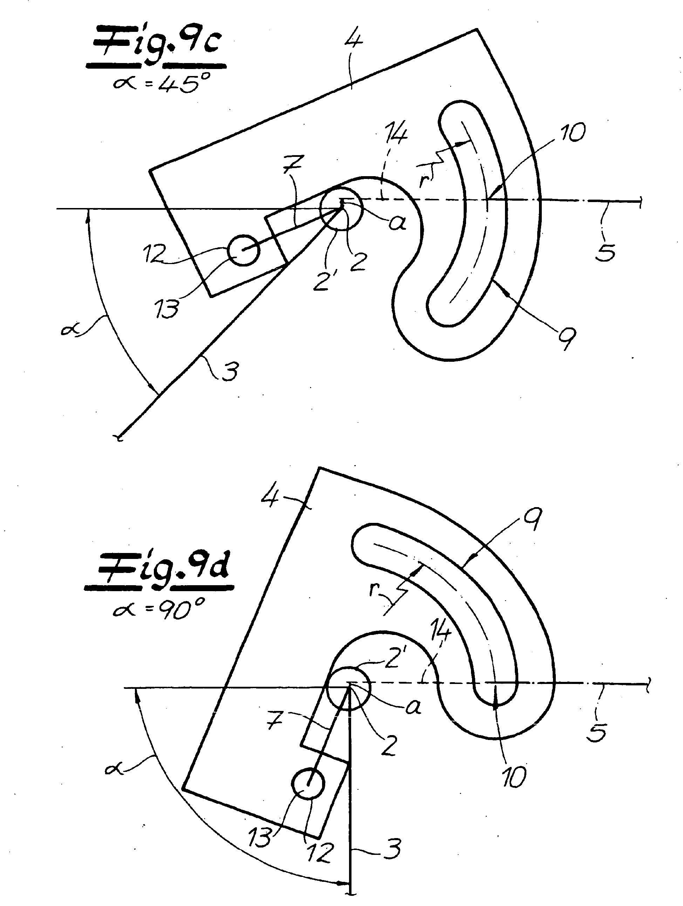

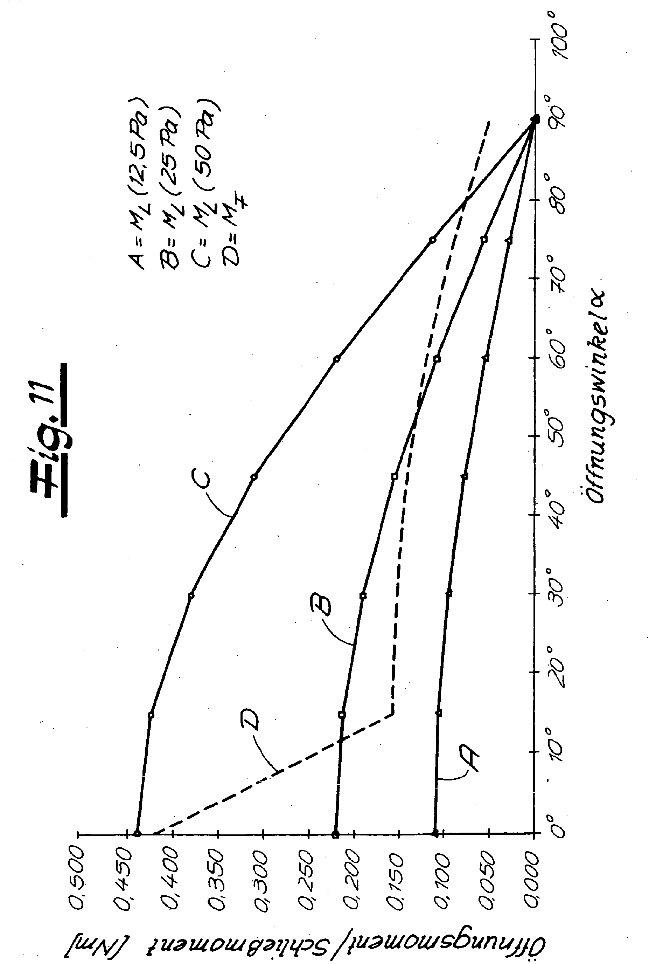

Die Funktionsweise der Regelklappenvorrichtung wird im Folgenden anhand der Fig. 9a bis 9d unter gleichzeitiger Berücksichtigung der Momentenverläufe gemäß Fig. 11 erläutert. Fig. 9a bis 9d zeigen schematisch den Anschlusshebel 4 in unterschiedlichen Funktionsstellungen bei einem Öffnungswinkel von $\alpha = 0°$, $\alpha =$

15°, α = 45° sowie α = 90°. Die Federkraftwirkungslinie 14 sowie die Regelklappe 3 und der daran angeschlossene Verbindungsarm 7 sind lediglich angedeutet. Ferner ist jeweils der Hebelarm a eingezeichnet.

Gemäß Fig. 9a ist der Anschlusshebel 4 in Schließstellung (α = 0°) der Regelklappe 3 zunächst von der Drehachse 2 bzw. Drehwelle 2' beabstandet und folglich berührungsfrei angeordnet. Im Zuge des Öffnens der Regelklappe 3 bei einem vorgegebenen Öffnungsdruck schwenkt die Regelklappe um die Drehachse 2. Durch die gelenkige Anbindung des Anschlusshebels 4 an einerseits die Schließfeder 5 und andererseits die Regelklappe 3 zieht die Regelklappe 3 den Anschlusshebel 4 zunächst in Richtung der Drehachse 2, so dass der Anschlusshebel 4 bei einem vorgegebenen Grenzwinkel gegen die Drehwelle 2' zur Anlage kommt (vgl. Fig. 9b). Der Hebelarm a nimmt stark ab. Sofern die Regelklappe 3 anschließend über diesen Grenzwinkel hinaus weiter geöffnet wird, bleibt der Anschlusshebel 4 in Anlage mit der Drehwelle 2', so dass der Anschlusshebel 4 reibungsfrei mit der Drehwelle 2' rotiert. Der gemäß Fig. 9a bei α = 0° in der oberen Endstellung angeordnete Führungszapfen 10 wandert in der Langlochführung 9 bis er bei vollständig geöffneter Regelklappe 3 in die gegenüberliegende untere Endstellung gelangt. Eine vergleichende Betrachtung der Fig. 9a bis 9d zeigt, dass selbst bei hohen Öffnungswinkeln stets ein definierter Resthebelarm a verbleibt.

Dieses spiegelt sich in den Momentenverläufen gemäß Fig. 11 wieder. In Fig. 11 sind zunächst einmal als Kurven A, B, C die vom Klappenwinkel α abhängigen Öffnungsmomente $M_L$ für einen Überdruck ΔP von 12,5 Pa, 25 Pa sowie 50 Pa dargestellt. Ferner ist als Kurve D das von der Schließfeder 5 erzeugte Schließmoment $M_F$ ebenfalls in Abhängigkeit vom Klappenwinkel α aufgezeichnet. Es ist zunächst einmal erkennbar, dass das von der Schließfeder 5 erzeugte Schließmoment $M_F$ von der Schließstellung (α = 0°) bis in die vollständige Offenstellung (α = 90°) kontinuierlich abnimmt und stets größer Null ist. Durch die bereits erläuterte Resthebelarmlänge a größer Null bei sämtlichen Öffnungswinkeln α wird folglich gewährleistet, dass bei im Wesentlichen konstanter Federkraft stets ein ausreichendes Schließmoment und folglich Rückholmoment verbleibt. Dieses gelingt im Wesentlichen durch die gelenkige Anbindung der Regelklappe 3 unter Zwischenschaltung des gleichsam freibeweglichen Anschlußhebels 4 an die Schließfeder 5. So zeigt Fig. 11, dass das Schließmoment $M_F$ in einem ersten Winkelbereich von einem Klappenwinkel von 0° bis zu einem Klappenwinkel von etwa 15° mit hoher Steigung stark abfällt und dann in einem zweiten Winkelbereich bis zum vollständig geöffneten Klappenwinkel von 90° lediglich mit geringer Steigung schwach abnimmt. Der Abfall in dem zweiten Abschnitt ist folglich (deutlich) geringer als in dem ersten Abschnitt. Es werden im Übrigen auch Ausführungsformen umfasst, bei denen das Schließmoment in dem zweiten Abschnitt zumindest bereichsweise konstant ist. Stets soll jedoch gewährleistet sein, dass das Schließmoment bei steigendem Öffnungswinkel nicht wieder zunimmt. Dabei macht Fig. 11 deutlich, dass das Schließmoment $M_F$ stets exakt zwei definierte Schnittpunkte mit dem Öffnungsmoment $M_L$ bei 25 Pa aufweist. Dabei schneidet das Schließmoment (Kurve D) sowohl die Kurve B als auch die Kurve C bei hohen Klappenöffnungswinkeln definiert und exakt einmal. Ausgehend von der vollständigen Offenstellung bei 90° wächst das Schließmoment $M_F$ stets kontinuierlich an, so dass eine einwandfreie Klappenrückführung gewährleistet ist.

Das mechanische Klappenrückführsystem bzw. die Schließfeder kann folglich mit im Wesentlichen konstanter Federvorspannung ausgelegt werden, welches die zusätzlichen Reibungseffekte durch zunehmende Federkräfte vermeidet und dadurch eine sichere Klappenrückführung ermöglicht.

Im Ausführungsbeispiel ist zwischen Langlochführung 9 und Gelenkausnehmung 12 eine Führungsfläche 15 angeordnet, die kurvenförmig als gleichsam Einformung ausgebildet ist und an der der Anschlußhebel 4 im Zuge des Öffnens an der Drehwelle 2' geführt ist. Insofern ist erkennbar, dass sich der L-förmige gelenkige Drehachse 4 gleichsam um die 2 konzentriert, so dass die beschriebenen geringen Massenträgheitsmomente auftreten.

Im Übrigen zeigt Fig. 6, dass das Gehäuse 1 bei der Ausführungsform als Mehrklappenvorrichtung zwischen den einzelnen nebeneinander angeordneten Regelklappen jeweils eine Trennwand 16 unter Bildung separater Strömungsbereiche aufweist.

Die Langlochführung 9 erstreckt sich in etwa kreisbogenförmig über eine Bogenlänge von $\frac{\pi}{4} \cdot r$ bis $\frac{\pi}{2} \cdot r$, wobei r der mittlere Radius ist. Die vorgespannte Schließfeder 5 ist schwenkbar an das Gehäuse 1 angelenkt und zwar an einen an dem Gehäuse 1 befestigten Federhalter 17, welcher verstellbar bzw. justierbar an dem Gehäuse 1 befestigt ist.

Schließlich kann es zweckmäßig sein, Einstellmöglichkeiten bzw. Justagemöglichkeiten vorzusehen, welche es erlauben, das Schließmoment der Regelklappen und folglich auch den Klappenöffnungsdruck in gewissen Grenzen an die erforderlichen Gegebenheiten anzupassen. Dieses kann insbesondere im Bereich der Abluft-Regelklappenvorrichtung sinnvoll sein, da dann vor Ort zum Beispiel die Möglichkeit besteht, den Klappenöffnungsdruck unter Berücksichtigung der auftretenden Kanaldruckverlustwerte zu optimieren.

**Patentansprüche**

1. Rauchschutzanlage für ein Gebäude, welches einen oder mehrere mögliche Brandräume (18) sowie einen oder mehrere über Türen (T) oder dergleichen mit den Brandräumen (18) verbundene Fluchtwege (19) aufweist, mit

- zumindest einer Zuluft-Anlage (20), welche zumindest einen die Fluchtwege (19) im Brandfall mit Überdruck beaufschlagenden Zuluft-Ventilator (21) und zumindest eine Zuluft-Regelklappenvorrichtung (22) aufweist,
- und zumindest einem Abluft-Kanal (24), welcher an einen oder mehrere Brandräume (18) unter Zwischenschaltung zumindest jeweils einer Entrauchungsklappe (25) angeschlossen ist und zum Abführen von Rauch aus dem Gebäude herausgeführt ist,

wobei an den Abluft-Kanal (24) zumindest eine Abluft-Anlage (26) angeschlossen ist, welche zumindest einen die Abluft-Anlage (26) mit Unterdruck beaufschlagenden Abluft-Ventilator (27) sowie zumindest eine Abluft-Reegelklappenvorrichtung (28) aufweist, **dadurch gekennzeichnet dass** die Zuluft-Regelklappenvorrichtung (22) zumindest eine federbelastete Regelklappe (23) aufweist, die bei Überschreiten eines vorgegebenen Grenzüberdrucks ($\Delta P_{+}$) selbsttätig öffnet und bei Unterschreiten des Grenzüberdrucks ($\Delta P_{+}$) selbsttätig schließt, wobei die Abluft-Regelklappenvorrichtung (28) zumindest eine federbelastete Regelklappe (29) aufweist, die bei Überschreiten eines vorgegebenen Grenzunterdruckes ($\Delta P.$) in der Abluft-Anlage (26) selbsttätig öffnet und bei Unterschreiten des Grenzunterdruckes ($\Delta P.$) selbsttätig schließt, wobei die Abluft-Anlage (26) zumindest einen an den Abluft-Kanal (24) angeschlossenen Abluftkasten (30) aufweist, an welchen der Abluft-Ventilator (27) und die Abluft-Regelklappenvorrichtung (28) angeschlossen sind, wobei die Regelklappen (29) im Zuge des Öffnens in Richtung des Innenraums des Abluftkastens (30) schwenken.

2. Rauchschutzanlage nach Anspruch 1, **dadurch gekennzeichnet, dass** die Abluft-Anlage (26) zwei oder mehr Abluft-Regelklappenvorrichtungen (28) aufweist.

3. Rauchschutzanlage nach Anspruch 2, **dadurch gekennzeichnet, dass** die Abluft-Regelklappenvorrichtungen (28) an unterschiedlichen Seiten des Abluftkastens (30) angeordnet sind.

4. Rauchschutzanlage nach einem der Ansprüche 1 bis 3, **dadurch gekennzeichnet, dass** der Abluft-Kanal (24) aus dem Dach des Gebäudes herausgeführt ist und der Abluftkasten (30) endseitig im Bereich des Daches an den Abluft-Kanal (24) angeschlossen ist.

5. Rauchschutzanlage nach einem der Ansprüche 1 bis 4, **dadurch gekennzeichnet, dass** der dem Grenzunterdruck ($\Delta P.$) entsprechende Klappenöffnungsdruck der Regelklappe (29) der Abluft-Regelklappenvorrichtung (28) dem maximalen Kanaldruckverlust ($A P_k$) des Abluft-Kanals (24) bei einem vorgegebenen Volumenstrom entspricht oder größer ist.

6. Rauchschutzanlage nach einem der Ansprüche 1 bis 5, wobei die Zuluft-Regelklappenvorrichtung (22) und/oder die Abluft-Regelklappenvorrichtung (28) ein Gehäuse (1), zumindest eine um eine Drehachse (2) schwenkbar in dem Gehäuse (1) gelagerte Regelklappe (3) und zumindest eine einerseits an das Gehäuse (1) und andererseits über zumindest ein Anschlussteil an die Regelklappe (3) angeschlossene Schließfeder (5) aufweist, wobei die Schließfeder (5) mit ihrer Federkraft (F) ein die Regelklappe (3) in Schließstellung haltendes oder in Schließstellung überführendes Schließmoment ($M_F$) erzeugt, wobei die Regelklappe (3) unter Bildung einer Durchströmöffnung um einen vorgegebenen Öffnungswinkel ($\alpha$) schwenkt, sobald ein einseitig auf die Regelklappe (3) wirkender Öffnungsdruck (P) ein das Schließmoment ($M_F$) übersteigendes Öffnungsmoment ($M_L$) erzeugt, und wobei das Anschlussteil als gelenkig an die Regelklappe angeschlossener Anschlusshebel (4) ausgebildet ist.

7. Rauchschutzanlage nach Anspruch 6, **dadurch gekennzeichnet, dass** der Anschlusshebel (4) gelenkig an einen drehfest mit der Regelklappe (3) verbundenen Verbindungsarm (7) oder Verbindungsansatz angeschlossen ist.

8. Rauchschutzanlage nach Anspruch 6 oder 7, **dadurch gekennzeichnet, dass** der Anschlusshebel (4) eine Führungskulisse (8) mit einer kurvenförmigen Langlochführung (9) aufweist, in welcher ein an die Schließfeder (5) endseitig angeschlossenes Führungselement gelenkig verschiebbar geführt ist.

9. Rauchschutzanlage nach einem der Ansprüche 6 bis 8, **dadurch gekennzeichnet, dass** die Schließfeder (5) über den Anschlusshebel (4) derart an die Regelklappe (3) angeschlossen ist, dass der auf die Regelklappe (3) wirkende Hebelarm (a) in allen Klappenstellungen größer als Null ist, so dass die Federkraft (F) in allen Klappenstellungen ein Schließmoment ($M_F$) größer Null erzeugt.

10. Rauchschutzanlage nach einem der Ansprüche 6 bis 9, **dadurch gekennzeichnet, dass** der Anschlusshebel (4) in Schließstellung von der Drehachse (2) oder Drehwelle (2') beabstandet ist und im Zuge des Öffnens der Regelklappe (3) ab einem vorgegebenen Grenzwinkel gegen die Drehachse (2) oder die Drehwelle (2') anliegt.

11. Rauchschutzanlage nach einem der Ansprüche 6 bis 10 mit einer Regelklappenvorrichtung in der Ausführungsform als Mehrklappenvorrichtung, mit einer Mehrzahl nebeneinander und/oder übereinander in einem gemeinsamen Gehäuse (1) angeordneter Regelklappen (3, 3'), wobei die Regelklappen (3, 3') über ein Gestänge (6) miteinander verbunden sind und gemeinsam öffnen und schließen, wobei auf die Regelklappen (3, 3') zumindest eine gemeinsame Schließfeder (5) wirkt, und wobei das Gehäuse (1) zwischen den einzelnen Regelklappen (3, 3') Trennwände (16) unter Bildung separater Strömungsbereiche aufweist.

12. Verfahren zum Abführen von Rauch aus Brandräumen eines Gebäudes und zur Rauchfreihaltung von Fluchtwegen des Gebäudes, mit einer Rauchschutzanlage nach einem der Ansprüche 1 bis 11, wobei im Brandfall mit der Zuluft-Anlage in den Fluchtwegen ein Überdruck eingerichtet wird, welcher einen vorgegebenen Grenzüberdruck nicht über schreitet, wobei mit der Abluft-Anlage aus einem über eine geschlossene Tür von dem Fluchtweg getrennten Brandraum Rauch oder dergleichen mit der Maßgabe abgeführt wird, dass in dem Brandraum ein vorgegebener Minimaldruck nicht unterschritten wird, so dass die Druckdifferenz zwischen Fluchtwegen und Brandräumen über die geschlossene Tür den vorgegebenen Grenzüberdruck nicht überschreitet.

**Claims**

1. A smoke protection system for a building, which comprises one or more possible fire zones (18) as well as one or more doors (T) or suchlike with escape routes (19) connected to the fire zones (18), with

    - at least one air supply system (20), which comprises at least one air supply ventilator (21) acting with an overpressure on the escape routes (19) in the event of fire and at least one air supply control flap device (22),
    - and at least one exit air duct (24), which is connected to one or more fire zones (18) with the interposition in each case of at least one smoke extraction flap (25) and is routed to the exterior in order to remove smoke from the building,

    wherein there is connected to the exit air duct (24) at least one exit air system (26), which comprises at least one exit air ventilator (27) acting with an overpressure on the exit air system (26) and at least one exit air control flap device (28),
**characterised in that** the air supply control flap device (22) comprises at least one spring-loaded control flap (23), which automatically opens when a predetermined limiting overpressure ($\Delta P_+$) is exceeded and automatically closes when the predetermined limiting overpressure ($\Delta P_+$) is fallen below, wherein the exit air control flap device (28) comprises at least one spring-loaded control flap (29), which automatically opens when a predetermined limiting underpressure ($\Delta P_-$) in the exit air system (26) is exceeded and automatically closes when the predetermined limiting underpressure ($\Delta P_-$) is fallen below, wherein the exit air system (26) comprises at least one exit air box (30) connected to the exit air duct (24), to which exit air box the exit air ventilator (27) and the exit air control flap device (28) are connected, wherein the control flaps (29) swivel in the course of opening in the direction of the interior of the exit air box (30).

2. The smoke protection system according to claim 1, **characterised in that** the exit air system (26) comprises two or more exit air control flap devices (28).

3. The smoke protection system according to claim 2, **characterised in that** the exit air control flap devices (28) are disposed at different sides of the exit air box (30).

4. The smoke protection system according to any one of claims 1 to 3, **characterised in that** the exit air duct (24) is routed out of the roof of the building to the exterior and the exit air box (30) is connected to the exit air duct at the end side in the region of the roof.

5. The smoke protection system according to any one of claims 1 to 4, **characterised in that** the flap opening pressure of the control flap (29) of the exit air control flap device (28) corresponding to the limiting underpressure ($\Delta P_-$) corresponds to or is greater than the maximum duct pressure loss ($\Delta P_k$) of the exit air duct (24) with a predetermined volume flow.

6. The smoke protection system according to any one of claims 1 to 5, wherein the air supply control flap device (22) and/or the exit air control flap device (28) comprises a housing (1), at least one control flap (3) mounted in a swivelling manner about an axis of rotation (2) in the housing (1) and at least one closing spring (5) connected on the one hand to the housing (1) and on the other hand via at least one connection part to the control flap (3), wherein the closing spring (5) with its spring force (F) generates a closing moment ($M_F$) holding the control flap (3) in the closed position or transferring the same into the closed position,
wherein the control flap (3) swivels through a predetermined opening angle ($\alpha$) thereby forming a through-flow opening as soon as an opening pressure (P) acting on one side on the control flap (3) generates an opening moment ($M_L$) exceeding the closing moment ($M_F$),
and wherein the connection part is constituted as a connection lever (4) connected in a hinged manner to the control flap.

7. The smoke protection system according to claim 6, **characterised in that** the connection lever (4) is connected in a hinged manner to a connection arm (7) or connection extension, which is connected torsion-resistant to the control flap (3).

8. The smoke protection system according to claim 6 or 7, **characterised in that** the connection lever (4) comprises a guide link (8) with a curved longitudinal hole guide (9), in which a guide element connected at one end to the closing spring (5) is guided displaceably in a hinged manner.

9. The smoke protection system according to any one of claims 6 to 8, **characterised in that** the closing spring (5) is connected by the connection lever (4) to the control flap (3) in such a way that the lever arm (a) acting on the control flap (3) is greater than zero in all flap positions, so that the spring force (F) generates a closing moment ($M_F$) greater than zero in all flap positions.

10. The smoke protection system according to any one of claims 6 to 9, **characterised in that** the connection lever (4) in the closed position is spaced apart from the axis of rotation (2) or the rotary shaft (2') and, in the course of the opening of the control flap (3), lies adjacent to the axis of rotation (2) or the rotary shaft (2') from a predetermined limiting angle.

11. The smoke protection system according to any one of claims 6 to 10 with a control flap device in the embodiment as a multiple flap device, with a plurality of control flaps (3, 3') disposed beside one another and/or above one another in a common housing (1), wherein the control flaps (3, 3') are connected to one another via a rod assembly (6) and open and close jointly, wherein at least one common closing spring (5) acts on the control flaps (3, 3'), and wherein the housing (1) comprises partition walls (16) between the individual control flaps (3, 3') thereby forming separate flow zones.

12. A method for removing smoke from fire zones of a building and for keeping escape routes of the building free from smoke, with a smoke protection system according to any one of claims 1 to 11,
wherein, in the event of fire, an overpressure is established in the escape routes by means of the air supply system, said overpressure not exceeding a predetermined limiting overpressure,
wherein smoke or suchlike is removed by means of the exit air system from a fire zone separated from the escape route by a closed door, subject to the proviso that a predetermined minimum pressure is not fallen below in the fire zone, so that the pressure difference between escape routes and fire zones across the closed door does not exceed the predetermined limiting overpressure.

**Revendications**

1. Installation de protection contre la fumée destinée à un bâtiment, lequel comporte une ou plusieurs chambres à feu (18) potentielles, ainsi qu'une ou plusieurs issues de secours (19) reliées par une ou par plusieurs portes (T) avec les chambres à feu (18), avec

   - au moins dispositif d'apport d'air frais (20), lequel comporte au moins un ventilateur d'apport d'air frais (21) soumettant les issues de secours (19) en cas d'incendie à une surpression et au moins un dispositif de clapets de réglage d'apport d'air frais (22),
   - et au moins un canal d'évacuation d'air (24), lequel est raccordé à une ou à plusieurs chambres à feu (18), au moins un clapet de désenfumage (25) étant intercalé et lequel pour l'évacuation de la fumée est tiré hors du bâtiment,

sur le canal d'évacuation d'air (24) étant raccordée au moins une installation d'évacuation d'air (26), laquelle comporte au moins un ventilateur d'évacuation d'air (27) soumettant l'installation d'évacuation d'air (26) à une dépression et au moins un dispositif de clapets de réglage de l'évacuation d'air (28), **caractérisée en ce que** le dispositif de clapets de réglage de l'apport d'air frais (22) comporte au moins un clapet de réglage (23) sur ressort, qui au dépassement d'une surpression limite prédéfinie ($\Delta$ P+) s'ouvre automatiquement et lorsque la surpression limite ($\Delta$ P+) n'est pas atteinte, se ferme automatiquement,
le dispositif de clapets de réglage de l'évacuation d'air (28) comportant au moins un clapet de réglage (29) sur ressort, qui en cas de dépassement d'une dépression limite prédéfinie ($\Delta$ P.) dans l'installation d'évacuation d'air (26) s'ouvre automatiquement et lorsque la dépression limite ($\Delta$ P.) n'est pas atteinte, se ferme automatiquement,
l'installation d'évacuation d'air (28) comportant au moins un caisson d'évacuation d'air (30) raccordé sur le canal d'évacuation d'air (24), sur lequel sont raccordés le ventilateur d'évacuation d'air (27) et le dispositif de clapets de réglage de l'évacuation d'air (28), les clapets de réglage (29) pivotant en direction de l'espace intérieur du caisson d'évacuation d'air (30), au fur et à mesure de l'ouverture.

2.  Installation de contrôle des fumées selon la revendication 1, **caractérisée en ce que** l'installation d'évacuation d'air (26) comporte deux ou plusieurs dispositifs de clapets de réglage de l'évacuation d'air (28).

3.  Installation de contrôle des fumées selon la revendication 2, **caractérisée en ce** les dispositifs de clapets de réglage de l'évacuation d'air (28) sont disposés sur différentes faces du caisson d'évacuation d'air (30).

4.  Installation de contrôle des fumées selon l'une quelconque des revendications 1 à 3, **caractérisée en ce que** le canal d'évacuation d'air (24) sort par le toit du bâtiment et **en ce que** le caisson d'évacuation d'air (30) est raccordé côté extrémité dans la zone du toit sur le canal d'évacuation d'air (24).

5.  Installation de contrôle des fumées selon l'une quelconque des revendications 1 à 4, **caractérisée en ce que** la pression d'ouverture du clapet de réglage (29) du dispositif de clapets de réglage de l'évacuation d'air (28) correspondant à la dépression limite (($\Delta$ P.) correspond ou est supérieure à la perte de pression maximale (($\Delta$ $P_k$) du canal d'évacuation d'air (24) pour un débit volumétrique prédéfini.

6.  Installation de contrôle des fumées selon l'une quelconque des revendications 1 à 5, le dispositif de clapets de réglage de l'apport d'air frais (22) et/ou le dispositif de clapets de réglage de l'évacuation d'air (28) comportant un boîtier (1), au moins un clapet de réglage (3) logé dans le boîtier (1) en étant susceptible de pivoter autour d'un axe de rotation et au moins un ressort de fermeture (5) raccordé d'une part sur le boîtier (1) et d'autre part, par l'intermédiaire d'au moins un raccord sur le clapet de réglage (3),
le ressort de fermeture (5) générant par sa tension de ressort (F) un couple de fermeture ($M_F$) maintenant le clapet de réglage (3) en position de fermeture ou l'amenant en position de fermeture,
le clapet de réglage (3) pivotant en créant une ouverture d'écoulement autour d'un angle d'ouverture ($\alpha$) prédéfini dès lors qu'une pression d'ouverture (P) agissant unilatéralement sur le clapet de réglage (3) créé un couple d'ouverture ($M_L$) supérieur au couple de fermeture ($M_F$),
et le raccord étant conçu sous la forme d'un levier de raccordement (4) raccordé sur le clapet de réglage.

7.  Installation de contrôle des fumées selon la revendication 6, **caractérisée en ce que** le levier de raccordement (4) est articulé sur un bras de liaison (7) ou sur un embout de liaison relié de façon solidaire en rotation au clapet de réglage (3).

8.  Installation de contrôle des fumées selon la revendication 6 ou 7, **caractérisée en ce que** le levier de raccordement (4) comporte un coulisseau de guidage (8) avec un guidage en forme de trou oblong courbe (9) sur lequel un élément de guidage raccordé côté extrémité sur le ressort de fermeture (5) est guidé en étant déplaçable de façon articulée.

9.  Installation de contrôle des fumées selon l'une quelconque des revendications 6 à 8, **caractérisée en ce que** le ressort de fermeture (5) est raccordé par l'intermédiaire du levier de raccordement (4) sur le clapet de réglage (3), de sorte que le bras de force (a) agissant sur le clapet de réglage (3) soit supérieur à zéro dans toutes les positions du clapet, de sorte que dans toutes les positions du clapet, la tension du ressort (F) génère un couple de fermeture ($M_F$) supérieur à zéro.

10. Installation de contrôle des fumées selon l'une quelconque des revendications 6 à 9, **caractérisée en ce qu'**en position de fermeture, le levier de raccordement (4) est écarté de l'axe de rotation (2) ou de l'arbre de rotation (2') et **en ce qu'**au fur et à mesure de l'ouverture du clapet de réglage (3), à partir d'un angle limite prédéfini, il s'applique contre l'axe de rotation (2) ou contre l'arbre de rotation (2').

11. Installation de contrôle des fumées selon l'une quelconque des revendications 6 à 10, avec un dispositif de clapets de réglage réalisé sous la forme d'un dispositif multi-clapets, avec une pluralité de clapets de réglage (3, 3') disposés côte à côte et/ou en superposition dans un boîtier (1) commun, les clapets de réglage (3, 3') étant reliés entre eux par l'intermédiaire d'une tringle (6) et s'ouvrant et se fermant en commun, au moins un ressort de fermeture (5) commun agissant sur les clapets de réglage (3, 3') et le boîtier (1) comportant entre chacun des clapets de réglage (3, 3') des parois de séparation (16) pour créer des zones d'écoulement séparées.

12. Procédé d'évacuation de fumée hors de chambres à feu d'un bâtiment et pour maintenir les voies de secours du bâtiment libres de fumée, avec une installation de contrôle des fumées selon l'une quelconque des revendications 1 à 11, en cas d'incendie une dépression laquelle ne dépasse pas une dépression limite prédéfinie étant établie dans les issues de secours au moyen du dispositif d'apport d'air,

à l'aide de l'installation d'évacuation d'air, de l'air ou similaire étant évacué d'une chambre à feu séparée de l'issue de secours par une porte fermée, avec la consigne que dans la chambre à feu, la pression ne soit pas inférieure à une pression minimale prédéfinie, de sorte que la pression différentielle entre les issues de secours et les chambres à feu via la porte fermée ne dépasse pas la surpression limite prédéfinie.

Fig.1

EP 1 785 201 B1

Fig.2

Fig.3

EP 1 785 201 B1

Fig.4

Fig.5

Volumenstrom

Fig.6

Fig.7

EP 1 785 201 B1

_Fig.8_

EP 1 785 201 B1

Fig.9a
α = 0°

Fig.9b
α = 15°

**Fig.9c**
α = 45°

4

14

7

r

10

12

α

13

2' 2

3

9

5

**Fig.9d**
α = 90°

4

9

r

14

2'

a

7

2

10

α

13'

12

3

5

*Fig.10*

$\mathcal{F}ig.11$

Öffnungsmoment / Schließmoment [Nm]

0,500
0,450
0,400
0,350
0,300
0,250
0,200
0,150
0,100
0,050
0,000

0°  10°  20°  30°  40°  50°  60°  70°  80°  90°  100°

Öffnungswinkel $\alpha$

$A = M_L \,(12,5\,Pa)$
$B = M_L \,(25\,Pa)$
$C = M_L \,(50\,Pa)$
$D = M_F$

C

D

B

A

EP 1 785 201 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251149 A1
- WO 03038283 A
- US 5788571 A